(19)

Europäisches Patentamt

European Patent Office

Office européen des brevets

(11) **EP 2 873 998 A1**

(12) **EUROPEAN PATENT APPLICATION**

(43) Date of publication:
20.05.2015 Bulletin 2015/21

(51) Int Cl.:
*G02B 21/36* (2006.01)          *H04N 5/235* (2006.01)
*G06T 5/50* (2006.01)

(21) Application number: 14191407.7

(22) Date of filing: 03.11.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 15.11.2013 JP 2013236930

(71) Applicant: Olympus Corporation
Tokyo 151-0072 (JP)

(72) Inventor: **Kaminaga, Shigeto**
**Tokyo, 151-0072 (JP)**

(74) Representative: **Schicker, Silvia**
**Wuesthoff & Wuesthoff**
**Patentanwälte PartG mbB**
**Schweigerstraße 2**
**81541 München (DE)**

(54) **Observation apparatus**

(57) An observation apparatus (100) includes a stage (14) on which a sample (S) is placed, image capturing means (13) for capturing an image of the sample (S) placed on the stage (14), velocity calculation means (18, 44, 61) for calculating a velocity of the stage (14), display means (80) for displaying the image of the sample (S), and a control unit (40) for switching an operating mode, on the basis of the velocity of the stage (14), which is calculated by the velocity calculation means (18, 44, 61), between a first operating mode for causing the display means (80) to display an image, which has a dynamic range wider than original images and is generated by merging the plurality of original images that the image capturing means (13) obtains by capturing images of the sample (S) under a plurality of different image capturing conditions, and a second operating mode for causing the display means (80) to display an original image, which the image capturing means (13) obtains by capturing the image of the sample (S) or an image obtained by processing the original image.

F I G. 1

EP 2 873 998 A1

**Description**

Background of the Invention

Field of the Invention

The present invention relates to an observation apparatus that generates an image having a wider dynamic range by merging a plurality of images.

Description of the Related Art

Conventionally, a high dynamic range process (hereinafter referred to as an HDR process) for generating an image having a dynamic range (hereinafter referred to as an HDR image) wider than original images by merging a plurality of images (hereinafter referred to as original images) obtained by being captured under different exposure conditions is known in a field of an observation apparatus provided with an image capturing device.

The HDR process enables suppression of a phenomenon such that an overexposure and an underexposure, which are caused by a narrow dynamic range of an image capturing device. Moreover, in principle, an image of high quality, into which both a bright portion and a dark portion of a subject are favorably put, can be obtained.

With an actual HDR process, however, the image quality of an HDR image is sometimes deteriorated as a result of putting a bright portion and a dark portion of a subject into an image in reverse. Such a deterioration of the image quality of an HDR image can be possibly caused by various factors. A position shift of original images to be merged is cited as a main factor. Typically, the position shift is deemed to occur when an image of a subject is captured while a field of view is being moved relatively to the subject, or when an image capturing device is shaken. Note that the position shift also includes a shift of an angle of view of original images.

Especially, in an observation apparatus such as a microscope system, which conducts a live observation of a subject, an observer observes a deterioration of the image quality of an HDR image as a flicker phenomenon in a live image, for example, while a stage is being moved to align a shooting position. Accordingly, the observer strongly feels uncomfortable or troublesome.

As a technique related to such a problem, a technique that suppresses a deterioration of the image quality of an HDR image, which is caused by a position shift, by correcting the position shift of original images is proposed. Japanese Laid-open Patent Publication No. 2012-165259 discloses a digital camera that calculates the amount of a position shift of original images as a motion vector and merges the original images after aligning them.

With the use of the technique disclosed by Japanese Laid-open Patent Publication No. 2012-165259, a favorable HDR image can be output by correcting a position shift of original images. To commercialize this technique, however, the length of processing time taken for the entire HDR process including the process of correcting a position shift needs to be reduced to a length that allows a live observation. Accordingly, a relatively high-performance processor is needed, leading to an increase in an initial cost.

In the meantime, the quantity of a position shift of original images, which is caused when an image of a subject is captured while a stage is being moved, and by extention, the degree of a deterioration of the image quality of an HDR image depends on a velocity of the stage. Moreover, the velocity of the stage has a relationship with an operation that a user performs while he or she is observing a subject. For example, in a case where a shooting position is aligned in a microscope system, a stage largely moves in many cases while an operation for roughly aligning a shooting position is being performed. Therefore, the velocity of the stage is high. In the meantime, the stage slightly moves while an operation for finely adjusting the shooting position is being performed. Therefore, the velocity of the stage is low. Moreover, the stage normally stops while a subject is being minutely observed after the shooting position is fixed.

Due to the above described relationships, the flicker phenomenon caused by the HDR process noticeably occurs especially when a stage is largely moved to align a shooting position. In contrast, the flicker phenomenon is less prone to occur or to be noticeable even if it occurs when a subject that needs a wide dynamic range is minutely observed or a shooting position is finely adjusted.

Based on the above described circumstances, an object of the present invention is to provide an observation apparatus that displays a live image by using an image having a wide dynamic range in a time period during which the wide dynamic range is needed without correcting a position shift of original images while suppressing a flicker phenomenon during a display of a live image.

Summary of the Invention

One aspect of the present invention provides an observation apparatus that includes: a stage on which a sample is placed; image capturing means for capturing an image of the sample placed on the stage; velocity calculation means for calculating a velocity of the stage; display means for displaying an image of the sample; and a control unit for switching an operating mode, on the basis of the velocity of the stage, which is calculated by the velocity calculation means, between a first operating mode for causing the display means to display an image, which has a dynamic range wider than original images and is generated by merging a plurality of original images that the image capturing means obtains by capturing images of the sample under a plurality of different image capturing conditions, and a second operating mode for causing the display means to display an original image that the image capturing means obtains by capturing an image of the sample or an image obtained by processing the original image.

The present invention can provide an observation apparatus that displays a live image with the use of an image having a wide dynamic ranger in a time period during which a wide dynamic range is needed without correcting a position shift of original images while suppressing a flickering phenomenon during a display of a live image.

Brief Description of the Drawings

The present invention will be more apparent from the following detailed description when the accompanying drawings are referenced.

FIG. 1 schematically illustrates a configuration of a microscope system according to a first embodiment of the present invention;
FIG. 2 is a flowchart illustrating an operating mode decision process executed in a host system included in the microscope system illustrated in FIG. 1;
FIG. 3 illustrates an example of switching of an operating mode when a user aligns a shooting position;
FIGs. 4A to 4E illustrate examples of an indicator displayed on a display unit of a microscope system according to a second embodiment;
FIG. 5 illustrates another example of switching of the operating mode when the user aligns the shooting position; and
FIGs. 6A to 6D illustrate examples of an indicator displayed on a display unit of a microscope system according to a third embodiment.

Description of the Embodiments

<First embodiment>

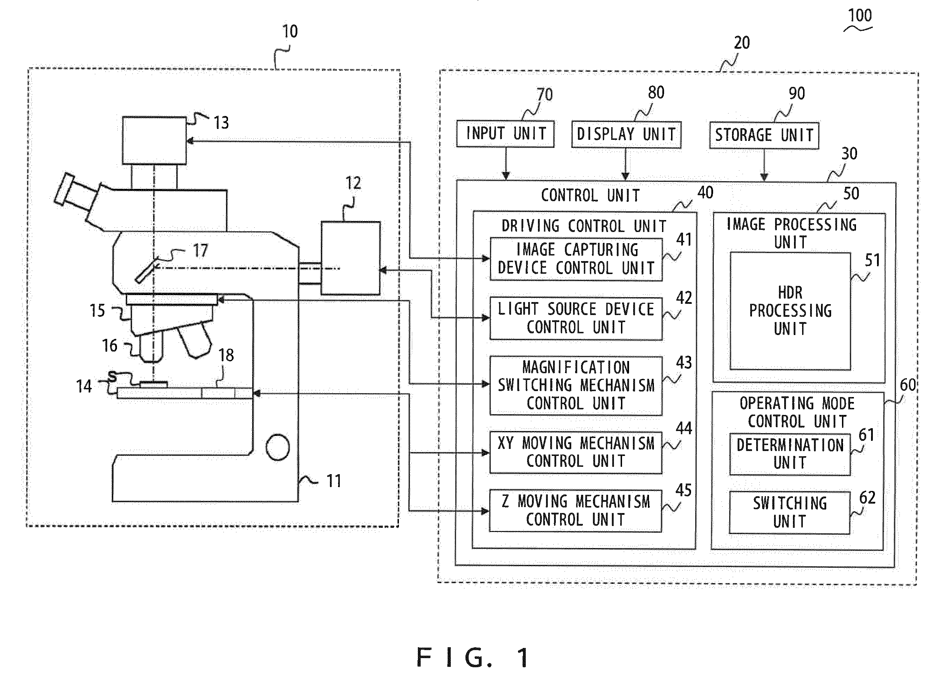

FIG. 1 illustrates an example of a configuration of a microscope system 100 according to a first embodiment of the present invention. The configuration of the microscope system 100 is described with reference to FIG. 1. A subject may be, for example, a printed circuit board or a biological sample. Namely, the microscope system 100 illustrated in FIG. 1 may be configured as an industrial microscope system, or a biological microscope system.

The microscope system 100 is an observation apparatus that includes a microscope apparatus 10 having an image capturing device 13 for capturing an image of a sample S, which is a subject, and a host system 20 connected to the microscope apparatus 10. The microscope apparatus 10 has a microscope body 11, to which the image capturing device 13 is attached. Moreover, also a light source device 12 is attached to the microscope body 11 in addition to the image capturing device 13.

The microscope body 11 supports a stage 14 on which the sample S is placed, and a revolver 15 to which an objective 16 is attached. Moreover, an illumination optics system for epi-illuminating the sample S is provided within the microscope body 11. The illumination optics system includes a half mirror 17, which functions as an optical path branch element for branching an optical path into an illumination optical path through which illumination light emitted from the light source device 12 passes, and an observation optical path through which observation light reflected from the sample S passes. Note that the optical path branch element is not limited to the half mirror 17. An arbitrary optical path branch element may be arranged within the microscope body 11. For example, when a fluorescence observation is conducted, a dichroic mirror may be arranged as a replacement for the half mirror 17.

The stage 14 has a horizontal placement surface orthogonal to an optical axis of the objective 16, and is configured to freely move in an XY direction orthogonal to the optical axis of the objective 16, and in a Z direction parallel to the optical axis of the objective 16. The stage 14 is an electric stage that electrically moves in the XY direction and the Z direction by being driven by a motor, not illustrated, under the control of the host system 20. However, the microscope apparatus 10 may have a manual stage that is manually moved in the XY direction and the Z direction by operating a knob, not illustrated, as a replacement for the stage 14. Moreover, the stage 14 may be configured to be electrically moved in either of the XY direction and the Z direction, and to be manually moved in the other direction.

In the stage 14, a linear scale 18 that detects the position of the stage 14 in the XY direction is provided. The linear scale 18 is also called a linear encoder. The linear scale 18 detects the XY position of the stage 14, and outputs information about the XY position to an XY moving mechanism control unit 44 of the host system 20 when needed.

The revolver 15 is supported by the microscope body 11 so that it freely rotates. With the rotations of the revolver 15, one objective (here, the objective 16) selected from among objectives attached to the revolver 15 is arranged above the sample S, more specifically, on the observation optical path.

The objective 16 is attached to the revolver 15 along with the other objectives so that they are freely replaceable. Any one of these objectives is selectively switched with rotations of the revolver 15 and used depending on an observation magnification and an observation method. The observation magnification of the microscope system 100 may be changed not by switching the objective but, for example, by changing a magnification of a zoom optics system provided on the observation optical path. Alternatively, the observation magnification may be changed by combining the switching of the objective and the change of the magnification of the zoom optics system.

The light source device 12 is a light source device for epi-illumination, which includes a light source such as a halogen lamp, an LED or the like, and a collector lens. The light source device 12 is attached, for example, at the rear of the microscope body 11. The light source device 12 may further include an ND (Neutral Density) filter for adjusting the quantity of light emitted from a lamp light source such as a halogen lamp or the like. Note that the adjustment of the quantity of illumination light is not limited to that implemented with the ND filter. The quantity of illumination light may be adjusted, for example, by changing a diameter of an aperture stop arranged on the illumination optical path. When the light source is an LED light source, the quantity of illumination light may be adjusted by performing a control, such as a PWM (Pulse Width Modulation) control or the like, for the light emission of the light source itself. Moreover, the light source device 12 may be a fiber light source connected to the microscope body 11 via an optical fiber, or may be a laser light source device having a laser. Additionally, the microscope apparatus 10 may include a light source device for transmitted illumination in addition to or as a replacement for the light source device 12 for epi-illumination.

The image capturing device 13 is, for example, a digital camera, and includes an image capturing element such as a CCD (Charge Coupled Device), a CMOS (Complementary Metal Oxide Semiconductor) or the like. The image capturing device 13 is image capturing means for obtaining an image of the sample S placed on the stage 14 by capturing the image of the sample S. The image capturing device 13 generates image data of the sample S by converting the image of the sample, which is formed on a photo-receiving plane of the image capturing element, into an electric signal (analog signal), and by converting the electric signal into a digital signal after amplifying the signal, and outputs the generated data to the host system 20. The output image data is stored in a storage unit 90 of the host system 20. The image data generated by the image capturing device 13 is hereinafter referred to as original image data, and the image of the sample S, which is represented by the original image data, is referred to as an original image.

FIG. 1 illustrates the microscope apparatus 10 as an erect microscope that conducts a bright-field observation. However, the microscope apparatus 10 may be an inverted microscope. Moreover, the observation method is not limited to a bright-field observation, and a subject may be observed with an arbitrary observation method (such as a dark-field observation, a fluorescence observation, a polarization observation, a differential interference contrast observation, or the like). In this case, the filter and the optics system may be suitably replaced depending on an observation method.

The host system 20 includes a control unit 30 that controls the whole of the microscope system 100, an input unit 70, a display unit 80, and a storage unit 90. The host system 20 may be, for example, a general-purpose computer such as a workstation, a personal computer, or the like. Alternatively, the host system 20 may be a dedicated device.

The control unit 30 includes a driving control unit 40 that controls driving of the microscope apparatus 10, an image processing unit 50 that generates an HDR image, and an operating mode control unit 60 that controls an operating mode of the microscope system 100. The microscope system 100 has, as operating modes for displaying a live image, at least an HDR live mode (a first operating mode) for executing an HDR process to cause the display unit 80 to display an HDR image as a live image, and a normal live mode (a second operating mode) for executing a normal process to cause the display unit 80 to display an original image obtained with the normal process, or an image obtained by processing the original image (hereinafter referred to collectively as normal images, and distinguished from the HDR image). Hereinafter, the process, which is executed in the HDR live mode, for displaying a live image is referred to as an HDR live process, whereas the process, which is executed in the normal live mode, for displaying a live image is referred to as a normal live process, and a distinction is made between these processes.

The control unit 30 includes, for example, a CPU (Central Processing Unit). The CPU executes a control program, so that the host system 20 functions as a driving control device for controlling the driving of the microscope apparatus 10, and also functions as an image processing device for generating an HDR image by merging a plurality of original images obtained by the microscope apparatus 10.

The driving control unit 40 includes an image capturing device control unit 41, a light source device control unit 42, a magnification switching mechanism control unit 43, an XY moving mechanism control unit 44 and a Z moving mechanism control unit 45, which respectively control different portions of the microscope system 100.

The image capturing device control unit 41 controls an image capturing operation of the image capturing device 13 by setting an analog gain for amplifying an analog signal output from an image capturing element, by switching between ON and OFF of an automatic exposure control, and by setting exposure time.

The light source device control unit 42 adjusts the quantity of illumination light, which is emitted from the light source device 12 and irradiated on the sample S, by controlling the light source device 12. Moreover, the light source device control unit 42 may adjust the quantity of illumination light by changing the diameter of a stop arranged on the illumination optical path with a control of the stop arranged on the illumination optical path. Alternatively, the light source device control unit 42 may adjust the quantity of illumination light by switching an ND filter on the illumination optical path with a control of an ND filter switching device.

The magnification switching mechanism control unit 43 changes an observation magnification by switching an objective used for an observation with a control and rotations of the revolver 15. Moreover, the magnification switching mechanism control unit 43 may change the observation magnification by changing the magnification of a zoom optics system with a control of the zoom optics system not illustrated.

The XY moving mechanism control unit 44 controls the amount of driving of a motor with the use of a specified position of an origin point of the stage 14 in the XY direction, which is detected by an origin point sensor not illustrated, as a starting point. More specifically, the XY moving mechanism control unit 44 controls the amount of driving of the motor by recognizing the current XY position of the stage 14 on the basis of information about the XY position of the stage 14, which is output from the linear scale 18, with the use of the specified position of the origin point as a starting point. Thus, the stage 14 is moved to an arbitrary XY position, so that the shooting position of the sample S is adjusted.

The Z moving mechanism control unit 45 detects the specified position of the origin point of the stage 14 in the Z direction by using the origin point sensor not illustrated, and controls the amount of driving of the motor with the use of this position of the origin point as a starting point. Thus, by moving the stage 14 to an arbitrary Z position, a focal position of the objective 16 is adjusted for the sample S. The Z moving mechanism control unit 45 may adjust the focal position of the objective 16 for the sample S by moving the whole of an upper half portion of the microscope body 11 including the revolver 15 to an arbitrary Z position as a replacement for the stage 14. Moreover, the microscope apparatus may be configured by providing the stage 14 or the revolver 15 with means for detecting a Z position so that the Z position of the stage 14 or the revolver 15 may be output from the means to the Z moving mechanism control unit 45 when needed.

In the microscope system 100, the driving control unit 40 controls the driving of the microscope apparatus 10 in order to generate an HDR image when an operating mode is the HDR live mode. Movover, the driving control unit 40 causes the microscope apparatus 10 to obtain a plurality of original images having different brightness (hereinafter referred to also as differently exposed images) by putting the same subject (the sample S) into images under different image capturing conditions. Here, the image capturing conditions are various types of conditions, which make the brightness of an image different, such as a setting of exposure time, a setting of an analog gain, a setting of an aperture diameter, a setting of an ND filter, a setting of the quantity of light emitted from a light source per unit time, and the like. When the microscope system 100 is a laser microscope system including a laser light source device, the image capturing conditions are a setting of a gain of a detector such as a PMT or the like, an intensity of a laser beam, a diameter of a pinhole, and the like.

The image processing unit 50 includes an HDR processing unit 51. When the operating mode is an HDR live mode, the HDR processing unit 51 generates an HDR image from a plurality of original images (differently exposed images), which the image capturing device 13 obtains by capturing images of the sample S under a plurality of different image capturing conditions and have different brightness.

The HDR processing unit 51 uses an arbitrary known HDR algorithm. The HDR processing unit 51 is typically configured, for example, as follows. Namely, the HDR processing unit 51 obtains a plurality of original images that are obtained by the microscope apparatus 10 and have different brightness, and also obtains image capturing conditions of the images. Then, the HDR processing unit 51 merges the original images while correcting them on the basis of the image capturing conditions, and generates a merged image that is obtained by increasing the number of gradations and has a dynamic range wider than the original images. The HDR processing unit 51 compresses the number of gradations of the generated image while maintaining the image quality of the image, and converts the image into an HDR image visible on the display unit 80.

The operating mode control unit 60 includes a determination unit 61 and a switching unit 62. The operating mode control unit 60 is configured to switch the operating mode at least between the HDR live mode and the normal live mode on the basis of the velocity of the stage 14 (since the direction of the velocity does not matter, the rate of the velocity, namely, a speed more strictly).

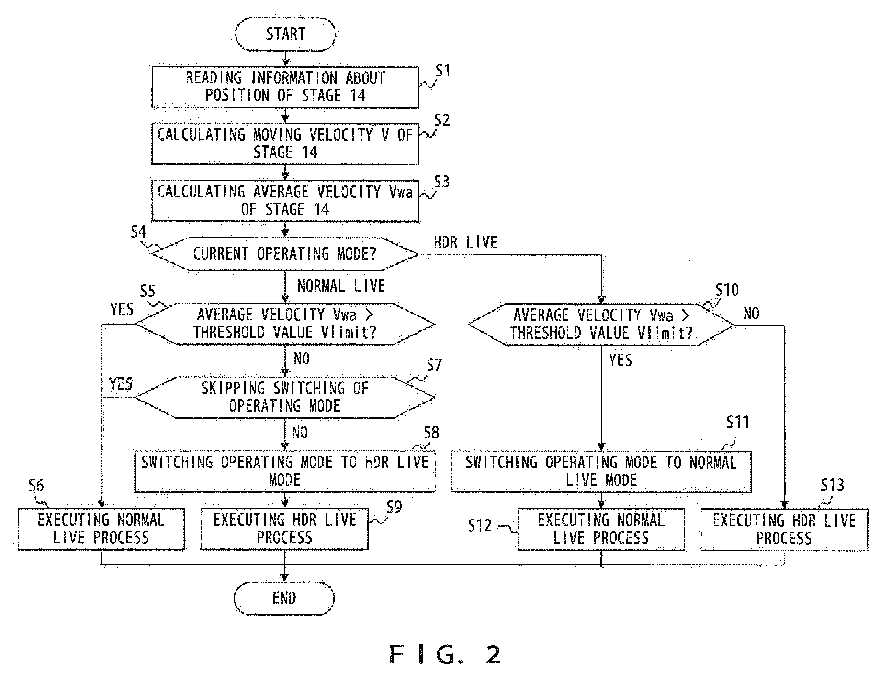

The determination unit 61 calculates the velocity of the stage 14 on the basis of information about the XY position of the stage 14, which is received via the linear scale 18 and the XY moving mechanism control unit 44. Namely, in the microscope system 100, the determination unit 61 functions as velocity calculation means (the velocity calculation unit) for calculating the velocity of the stage 14 along with the linear scale 18 and the XY moving mechanism control unit 44. The determination unit 61 determines whether the microscope system 100 is to operate in either the HDR live mode or the normal live mode, on the basis of the velocity of the stage 14, which is calculated by the velocity calculation means. More specifically, the determination unit 61 determines whether the microscope system 100 is to operate in either the HDR live mode or the normal live mode, on the basis of the velocity of the stage 14, which is calculated by the velocity calculation means, and a threshold value that indicates a specified velocity. The switching unit 62 switches the operating mode on the basis of a result of the determination of the determination unit 61. A specific determination method will be described later with reference to FIG. 2.

The input unit 70 is means such as a keyboard, a mouse, a touch panel, various types of switches, or the like, which accepts an instruction from a user, and outputs an operation signal according to the accepted instruction to the control unit 30.

The display unit 80 is a display device such as a CRT (Cathode Ray Tube) display, an LCD (Liquid Crystal Display), an organic EL (electroluminescence) display, or the like. The display unit 80 is display means for displaying an image (an HDR image, a normal image, or the like) of the sample S on a screen on the basis of a signal issued from the control unit 30. The input unit 70 and the display unit 80 may be integrally configured, for example, by stacking a touch panel on the screen of the display device.

The storage unit 90 includes a main storage device such as a ROM (Read Only Memory), a RAM (Random Access Memory), or the like, and an external storage device such as a hard disk or the like. The storage unit 90 may further include a portable recording medium driving device, and a portable recording medium such as an optical disk, a flash memory, or the like, which is inserted in the portable recording medium driving device. The storage unit 90 stores a control program of the microscope system 100, and various types of data that include image data and are used while the control program is being executed. The control program is recorded on a ROM or a portable recording medium, and executed by being loaded into the RAM.

FIG. 1 illustrates the example where the input unit 70, the display unit 80, and the storage unit 90 are provided within the host system 20. However, in the microscope system 100, these units may be configured as peripheral devices connected to the host system 20. Moreover, a communication device used to communicate with an external device, a printing device, and the like may be connected to the host system 20.

In the microscope system 100 configured as described above, the host system 20 executes the operating mode decision process illustrated in FIG. 2, so that a live image can be displayed with the use of an HDR image in a time period during which a wide dynamic range is needed without correcting a position shift of original images while suppressing a flicker phenomenon during a display of a live image.

FIG. 2 is a flowchart illustrating the operating mode decision process executed in the host system 20. The operating mode decision process is described below with reference to FIG. 2. The operating mode decision process illustrated in FIG. 2 is executed in a way such that a control program recorded in the ROM of the storage unit 90 or on a portable recording medium is loaded into the RAM and executed by the control unit 30. The operating mode decision process illustrated in FIG. 2 is started periodically, for example, at predetermined specified cycles. Specifically, the operating mode decision process may be started at an image capturing timing of the image capturing device 13, or at a timing at which the linear scale 18 outputs information about the XY position of the stage 14 to the XY moving mechanism control unit 44.

Once the operating mode decision process is started, the control unit 30 reads position information of the stage 14 (step S1). Here, the control unit 30 causes the storage unit 90 to store the information about the XY position of the stage 14, which the XY moving mechanism control unit 44 has received from the linear scale 18. Moreover, the control unit 30 calculates the moving velocity V of the stage 14, and causes the storage unit 90 to store the calculated velocity (step S2). For example, the determination unit 61 calculates the moving velocity V of the stage 14 from the most recent two information pieces about the XY position of the stage 14, which are stored in the storage unit 90.

Thereafter, the control unit 30 (the determination unit 61) calculates an average velocity Vwa of the stage 14 from the most recent N moving velocities V of the stage 14, which are stored in the storage unit 90 (step S3). Here, the control unit 30 calculates the average velocity Vwa from the most recent N moving velocities V of the stage 14, which are moving velocities of the stage 14 at a plurality of different times, by performing weighted moving averaging. A calculation expression is represented by an expression (1) based on the assumption that the most recent N moving velocities of the stage 14 are V[0] to V[N-1] and weight coefficients are $K_0$ to $K_{N-1}$. V[N-1] indicates the moving velocity immediately precedingly calculated in step S2, and V[0] indicates the moving velocity calculated in step S2 of the operating mode decision process executed by N times earlier. Moreover, the weight coefficients have relationships represented by expressions (2) and (3).

$$Vwa = K_0 \times V[0] + K_1 \times V[1] + K_2 \times V[2] + \ldots, + K_{N-1} \times K[N-1] \quad \ldots (1)$$

$$K_0 \leq K_1 \leq K_2 \leq \ldots \leq K_{N-1} \quad \ldots (2)$$

$$K_0+K_1+K_2+\ \ldots\ +K_{N-1}=1 \qquad\qquad \ldots\ (3)$$

When the average velocity Vwa is calculated, the control unit 30 (the determination unit 61) determines the current operating mode (step S4). This determination is made, for example, by referencing information about the current operating mode, which is stored in the storage unit 90.

When the control unit 30 (the determination unit 61) determines that the current operating mode is the normal live mode, it further determines whether the average velocity Vwa of the stage 14, which is calculated in step S3, is higher than a threshold value Vlimit that indicates a specified moving velocity (step S5). The threshold value Vlimit is a value predetermined by taking into account various factors such as the degree of ease of an occurrence of a phenomenon called an overexposure or an underexposure, which depends on the sample S, a limit of user's tolerance of a flicker phenomenon or a deterioration of the image quality of an HDR image, and the like.

When the average velocity Vwa is higher than the threshold value Vlimit ("YES" in step S5), the control unit 30 causes the display unit 80 to display a normal image as a live image by executing the normal live process without changing the operating mode (step S6). Thereafter, the control unit 30 terminates the operating mode decision process. Since the normal live process is a known process, its detailed explanation is omitted.

When the average velocity Vwa is equal to or lower than the threshold value Vlimit ("NO" in step S5), the control unit 30 (the determination unit 61) determines whether switching of the operating mode is to be skipped (step S7). Specifically, the control unit 30 determines whether the switching of the operating mode is to be skipped, for example, depending on whether the average velocity Vwa is determined to be equal to or lower than the threshold value Vlimit in step S5 successively by M times (for example, twice) in the past in the operating mode decision process.

When the number of times that it is determined continuously the average velocity Vwa is equal to or lower than the threshold value Vlimit is smaller than M times, the control unit 30 determines that the switching of the operating mode is to be skipped ("YES" in step S7), and causes the display unit 80 to display a normal image as a live image by executing the normal live process without changing the operating mode (step S6). Thereafter, the operating mode decision process is terminated.

When the number of times that it is determined continuously the average velocity Vwa is equal to or lower than the threshold value Vlimit is equal to or larger than M times, the control unit 30 (the determination unit 61) determines that the switching of the operation mode is not to be skipped ("NO" in step S7). Thereafter, the control unit 30 (the switching unit 62) switches the operating mode to the HDR live mode (step S8). Here, various types of settings such as an exposure setting and the like are changed to execute the HDR live process. Moreover, the control unit 30 causes the display unit 80 to display an HDR image as a live image by executing the HDR live process (step S9), and terminates the operating mode decision process. Since the HDR live process is a known process including the HDR process, its detailed explanation is omitted.

Also when the control unit 30 (the determination unit 61) determines that the current operating mode is the HDR live mode, it further determines whether the average velocity Vwa of the stage 14, which is calculated in step S3, is higher than the threshold value Vlimit (step S10).

When the average velocity Vwa is higher than the threshold value Vlimit ("YES" in step S10), the control unit 30 (the switching unit 62) switches the operating mode to the normal live mode (step S11). Here, the control unit 30 changes various types of settings such as an exposure setting and the like in order to execute the normal live process. Thereafter, the control unit 30 causes the display unit 80 to display a normal image as a live image by executing the normal live process (step S12), and terminates the operating mode decision process.

When the average velocity Vwa is equal to or lower than the threshold value Vlimit ("NO" in step S10), the control unit 30 causes the display unit 80 to display the HDR image as a live image by executing the HDR live process without changing the operating mode (step S13). Thereafter, the control unit 30 terminates the operating mode decision process.

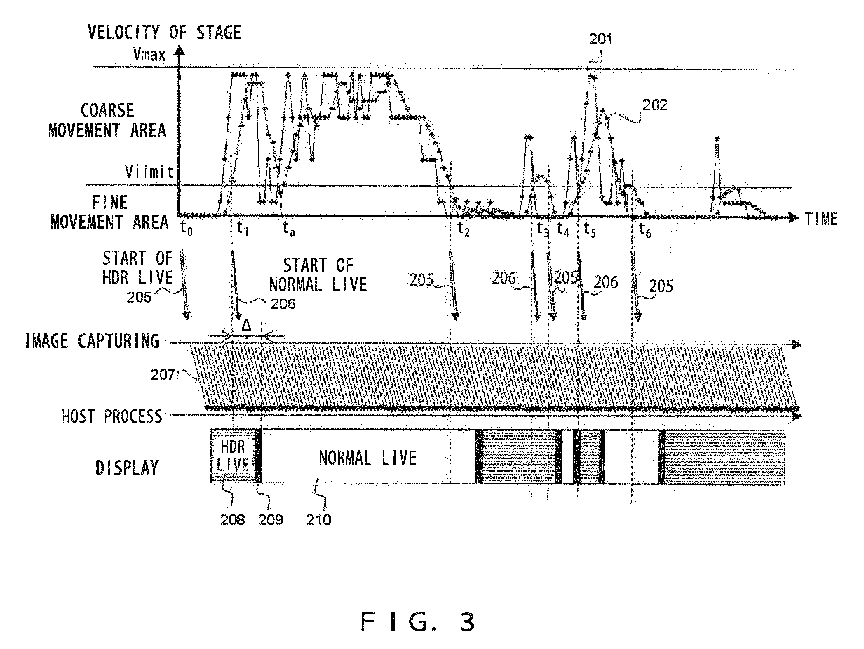

FIG. 3 illustrates an example of switching of the operating mode of the microscope system 100 when a user aligns a shooting position. FIG. 3 illustrates a state where the shooting position is roughly aligned by largely moving the stage 14 at the beginning of an observation and the stage 14 is slightly moved for a fine adjustment thereafter. A display of a live image, which is made by the microscope system 10 with the use of an HDR image in a time period during which a wide dynamic range is needed without correcting a position shift of original images while suppressing a flicker phenomenon during the display of the live image, is described with reference to FIG. 3.

To begin with, FIG. 3 is briefly described. A line graph illustrated in an upper stage of FIG. 3 illustrates a temporal change of the velocity of the stage 14. A polygonal line 201 indicates the moving velocity V of the stage 14, whereas a polygonal line 202 indicates a temporal change of the average velocity Vwa of the stage 14. Plots of the polygonal line 201 and the polygonal line 202 indicate a velocity calculation timing of the stage 14. A vertical axis indicates the moving velocity and the average velocity of the stage 14, whereas a horizontal axis indicates time. Here, a fine movement area indicates a velocity area equal to or lower than the threshold value Vlimit, whereas a coarse movement area indicates a velocity area higher than the threshold value Vlimit. A velocity Vmax indicates a maximum velocity of the stage 14.

Arrows 205 and 206 illustrated in a middle stage of FIG. 3 respectively indicate a timing at which the host system 20 transmits a command to the image capturing device 13 in order to switch the operating mode to the HDR live mode and a command to the image capturing device 13 in order to switch the operating mode to the normal live mode. Similarly, arrows 207 illustrated in the middle stage of FIG. 3 indicate an image capturing timing of the image capturing device 13. An interval of the arrows 207 indicates a frame rate. Here, the example where the image capturing device 13 operates at a constant frame rate regardless of the operating mode is depicted. Moreover, influences such as an interruption and the like of the image capturing process, which are exerted by switching the operating mode, are not illustrated.

A lower stage of FIG. 3 illustrates a temporal change of types of an image (a normal image and an HDR image) displayed on the display unit 80 as a live image. A time period 208 indicates a time period during which an HDR image is displayed, whereas a time period 210 indicates a time period during which a normal image is displayed. Moreover, a time period 209 indicates a time period during which a discontinuous image that is not guaranteed as a live image is displayed with the switching of the operating mode. In the time period 209, not a live image but, for example, an image that is lastly displayed in the immediately preceding time period is displayed without being updated.

As illustrated in FIG. 3, in the microscope system 100, the operating mode is automatically switched from the normal live mode to the HDR live mode when the average velocity Vwa of the stage 14 shifts from the coarse movement area to the fine movement area (for example, at times t2, t4, t6), and the operating mode is automatically switched from the HDR live mode to the normal live mode when the average velocity Vwa of the stage 14 shifts from the fine movement area to the coarse movement area (for example, at times t1, t3, t5). Accordingly, although a time lag is caused by the length of time taken to switch the operating mode, an HDR image is displayed on the display unit 80 as a live image in most cases in a fine movement time period during which the stage 14 is slowly moved, or a stop time period during which the stage 14 is stopped (for example, a time period from the time t2 to the time t3, and a time period at and after the time t6), and a normal image is displayed on the display unit 80 as a live image in most cases in a coarse movement time period (for example, the time period from the time t1 to the time t2) during which the stage 14 is quickly moved.

Accordingly, with the microscope system 100, generation of an HDR image is suppressed in a coarse movement time period during which a flicker phenomenon is prone to occur, and an HDR image is generated in a fine movement time period or a stop time period, during which a flicker phenomenon is difficult to occur or to be noticeable. Therefore, a flicker phenomenon that occurs during a live observation can be effectively suppressed.

Additionally, there is a high possibility that a user roughly aligns a shooting position in the coarse movement time period, and it is sufficient for the user to roughly grasp the shape, the position and the like of the sample S. Therefore, even though an overexposure or an underexposure occurs in a live image, it does not matter in actual use in many cases. In the meantime, in the fine movement time period or the stop time period, there is a high possibility that a fine adjustment of a shooting position, a detailed observation after an adjustment, shooting of an image to be stored, and the like are performed. Therefore, it is desirable to suppress occurrences of phenomena such as an overexposure and an underexposure to a minimum. Namely, in the fine movement time period or the stop time period, the need for an image having a wider dynamic range is relatively high in comparison with the coarse movement time period. With the microscope system 100, an HDR image is generated without correcting a position shift of original images in the fine movement time period or the stop time period. Accordingly, it is possible to display a live image with the use of an HDR image in a time period during which a wide dynamic range is needed, which is preferable.

Furthermore, with the microscope system 100, switching of the operating mode, which is intended to achieve the above described effects, can be automatically performed.

A point that not the moving velocity V but the average velocity Vwa of the stage 14 is used to determine the switching of an operating mode, and a point that the switching of the operating mode is skipped under a specified condition in step S7 of FIG. 2 are described next with reference to FIG. 3.

As described above, a certain length of time is needed to switch the operating mode. For example, this length of time includes the length of time taken until the image capturing device 13 recognizes a command 205 or a command 206, the length of time taken from when the image capturing device 13 starts to capture an image until the image capturing device 13 completes a transmission of an original image to the host system 20, and the length of time taken to change settings on the host system 20. When the operating mode is switched from the normal live mode to the HDR live mode, it is needed to obtain and store a plurality of original images to be merged. Therefore, a lot more time is expected to be taken. Accordingly, a display of a live image, which is suitable for the velocity of the stage 14, is made not immediately but with a delay although the velocity of the stage 14 changes over a threshold value. For example, in FIG. 3, although the average velocity of the stage 14 shifts from the fine movement area to the coarse movement area at the time t1, the normal image is displayed on the display unit 80 with a delay by Δt from the time t. In the time period of Δt, the HDR image is displayed although the normal image is to be originally displayed. A time period during which an image of a type different from an image to be originally displayed is displayed is hereinafter referred to as an abnormal time period.

Such an abnormal time period occurs each time the operating mode is switched. Therefore, when the operating mode is frequently switched, a ratio of the abnormal time period to the entire time period during which a live image is displayed rises, which is not preferable. There are not a few cases where switching itself of the operating mode is not needed when the velocity of the stage 14 that continuously stays in either of the areas (the coarse movement area or the fine movement area) temporarily shifts to the other area (the fine movement area or the coarse movement area), especially, for example, when an operation of the stage 14, which is performed by using a joystick or a dial, is temporarily stopped without intention.

Using not the moving velocity V but the average velocity Vwa of the stage 14 in order to determine the switching of the operating mode contributes to suppression of such unneeded switching of the operating mode. This is because the determination process is executed by less evaluating an influence of a temporary velocity change than in the case using the moving velocity V when the average velocity Vwa calculated by performing the weighted moving averaging represented by the expression (1) is used.

Also the skip determination process indicated by step S7 of FIG. 2 contributes to the suppression of the unneeded switching of the operating mode. When the average velocity Vwa is not equal to or lower than the threshold value Vlimit successively by a specified number of times, there is a high possibility that a shift between the areas of the velocity of the stage 14 is temporary.

Accordingly, with the microscope system 100, not the moving velocity V but the average velocity Vwa of the stage 14 is used to determine the switching of the operating mode, and the switching of the operating mode is skipped under a specified condition, whereby unneeded switching of the operating mode can be suppressed. Moreover, the number of times of the switching itself of the operating mode is decreased, so that the ratio of an abnormal time period to the entire time period during which a live image is displayed can be dropped.

Such effects can be verified in FIG. 3. With reference to FIG. 3, the command to switch to the normal live mode, which is indicated by the arrow 206, is issued at the time t1, and the moving velocity V of the stage 14, which is equal to or lower than the threshold value Vlimit, is then calculated by a plurality of times (four times totaled by performing two successive calculations twice) immediately after the normal image is displayed on the display unit 80. Accordingly, when it is determined whether the switching is needed by making a comparison between the moving velocity V and the threshold value Vlimit, the switching can possibly occur by a plurality of times (twice) . In the meantime, in the microscope system 100, whether the switching is needed is determined by making a comparison between the average velocity Vwa and the threshold value Vlimit. Therefore, a velocity equal to or lower than the threshold value Vlimit is calculated only once at a time ta. Moreover, the skip determination process (step S7) is incorporated in the microscope system 100. Accordingly, the switching of the operating mode is performed only when a velocity equal to or lower than the threshold value Vlimit is calculated successively by M times (twice here). Therefore, a calculation of the average velocity Vwa equal to or lower than the threshold value Vlimit at the time ta does not cause the switching of the operating mode, whereby unneeded switching is suppressed.

FIG. 2 illustrates the example where the skip determination process is executed only when the current operating mode is the normal live mode. However, a similar process may be executed also when the current operating mode is the HDR live mode.

Additionally, an arbitrary process may be employed as the skip determination process as long as the above described objective is achieved. For example, whether the operating mode is to be switched may be determined by making a comparison between a second average velocity Vwa2 and the threshold value Vlimit after calculating the second average velocity Vwa2 by performing the weighted moving averaging for the most recent M average velocities Vwa of the stage 14.

<Second embodiment>

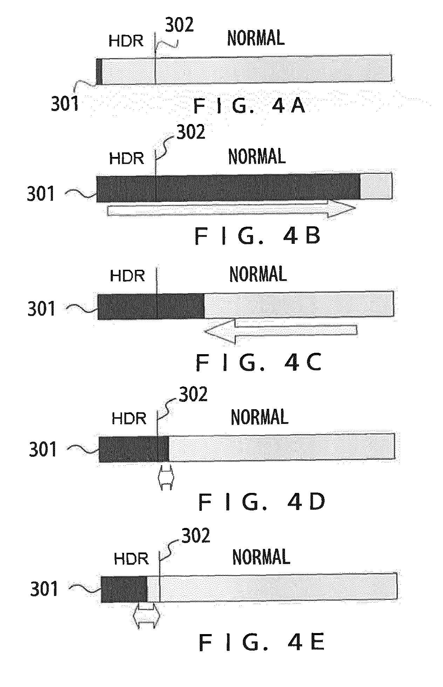

FIGs. 4A to 4E illustrate an indicator displayed on a display unit of a microscope system according to a second embodiment. The microscope system according to this embodiment is different from the microscope system 100 according to the first embodiment in a point that the indicator illustrated in FIGs. 4A to 4E is displayed on the display unit 80.

The indicator illustrated in FIGs. 4A to 4E is configured to display the velocity (for example, the average velocity Vwa) of the stage 14, which is calculated by the velocity calculation means, and the threshold value Vlimit so as to compare them. More specifically, a line 302 that indicates the threshold value Vlimit is displayed at a fixed position, whereas an area 301 that indicates the velocity of the stage 14 is configured to be extended and contracted within the indicators.

In the microscope system according to this embodiment, a user can visually grasp the velocity of the stage 14 through the indicator on the basis of a relationship with the threshold value Vlimit. Accordingly, the user can easily predict an occurrence of switching of the operating mode.

For example, when the stage 14 is largely moved to search for a shooting position after an observation is started, the display of the indicator changes from FIG. 4A to 4B, and the operating mode is switched from the HDR live mode to the normal live mode. Thereafter, when the shooting position is searched after the velocity of the stage 14 is dropped, the indicator is displayed as illustrated in FIG. 4C. A user can predict that the switching of the operating mode will occur on the basis of the display of the indicator if he or she continuously drops the velocity of the stage 14. Accordingly, when the user does not desire to cause the switching of the operating mode, it is sufficient for the user to operate the stage 14 so that the velocity of the stage 14 does not drop over the threshold value Vlimit as illustrated in FIG. 4D. In the meantime, when a shooting position is almost decided and the user desires to start a detailed observation, he or she can switch the operating mode from the normal live mode to the HDR live mode by dropping the velocity of the stage 14 to a velocity equal to or lower than the threshold value Vlimit as illustrated in FIG. 4E.

As described above, with the microscope system according to this embodiment, a user operates the stage 14 while verifying the display of the indicator, so that occurrences of switching of the operating mode, which is not intended by the user, can be significantly suppressed. Other effects are similar to those achieved by the microscope system 100 according to the first embodiment.

Note that the indicator may be configured so that a color of the area 301 may vary or the area 301 may flicker, for example, when the velocity of the stage 14 approaches the threshold value Vlimit. Thus, a user can predict an occurrence of the switching of the operating mode through the indicator with more ease.

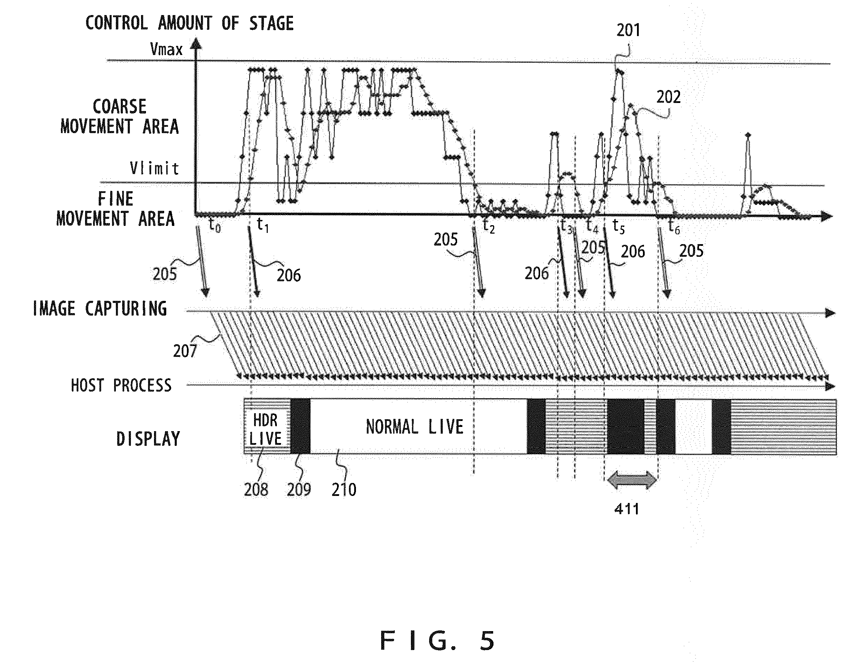

FIG. 5 illustrates another example of switching of the operating mode in the microscope system when a user aligns a shooting position. FIG. 5 illustrates the example where a frame rate of the image capturing device 13 is low, a delay time from when image capturing is started until an image is displayed on the screen is long, and a time period during which a discontinuous image is displayed with the switching of the operating mode is long in comparison with FIG.3. An abnormal time period especially tends to increase under such conditions. For example, it is preferable to display an image in the normal live mode in a time period 411 because the velocity of the stage 14 stays in the coarse movement area. However, an HDR image is displayed during the entire time period.

The configuration where a user can intentionally suppress the switching of the operating mode as in the microscope system according to this embodiment is especially preferable in a case where an abnormal time period is long.

<Third embodiment>

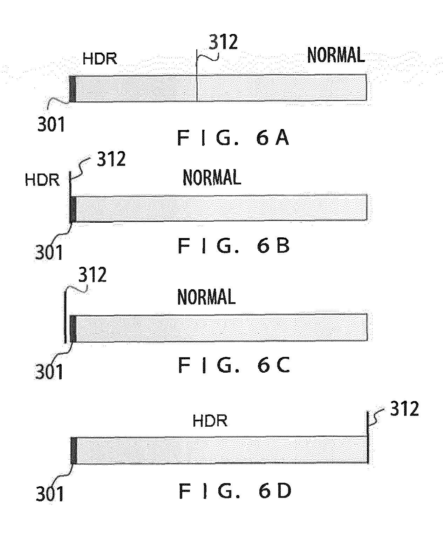

FIGs. 6A to 6D illustrate an indicator displayed on a display unit of a microscope system according to a third embodiment. The microscope system according to this embodiment is different from the microscope system according to the second embodiment in a point that the setting of the threshold value Vlimit can be changed through the indicator illustrated in FIGS. 6A to 6D, and that the operating mode decision process is executed on the basis of the threshold value after being changed. The indicator illustrated in FIGs. 6A to 6D is different from that illustrated in FIGs. 4A to 4E in a point that a line 312 indicating the threshold value Vlimit is movable. Other points are similar to those of the indicator illustrated in FIGs. 4A to 4E.

As described above in the first embodiment, the threshold value Vlimit is predetermined by taking into account factors such as the degree of ease of an occurrence of a phenomenon called an overexposure or an underexposure, a limit of user' s tolerance of a flicker phenomenon, and a deterioration of the image quality of an HDR image, and the like. FIG. 6A illustrates a normal setting state.

However, there may be cases where the setting of the threshold value Vlimit is desired to be temporarily changed during a live observation although the setting illustrated in FIG. 6A is basically used. For example, the cases include a case where an HDR image is displayed only while the stage is stopped, a case where a normal image is always displayed, and a case where an HDR image is always displayed. With the microscope system according to this embodiment, the line 312 displayed on the indicator is moved to the position illustrated in FIG. 6B, 6C, or 6D, so that the above described cases can be handled.

With the microscope system according to this embodiment, a user can easily change the setting of the threshold value Vlimit. Accordingly, the user can use the normal live mode or the HDR live mode according to user's intention, whereby a stress of the user, which is placed by executing an unintentional operating mode, can be reduced.

The above described embodiments refer to the specific examples for ease of understanding of the invention. However, the present invention is not limited to these embodiments. Various modifications and changes may be made to the microscope system within the scope of the present invention stipulated by claims.

For example, the moving velocity of the stage 14 may be compared with the threshold value as a replacement for the average velocity of the stage 14, or the skip determination process indicated by step S7 of FIG. 2 may be omitted. Moreover, the stage 14 is not limited to the electric stage that linearly operates in the XY direction, and may be an electric stage that rotates about the position of an origin point.

Additionally, the above described embodiments refer to the HDR process for generating an image having a dynamic range wider than an original image as the image process for improving a gradation representation. However, another existing image process for improving a gradation representation may be adopted as a replacement for the HDR process.

Furthermore, the above described embodiments refer to the examples where the velocity calculation means calculates the velocity of the stage 14 on the basis of information about an XY position output from the linear scale 18. However, the velocity calculation means may calculate the velocity of the stage 14 with another method. For example, the velocity calculation means may calculate the velocity of the stage 14 on the basis of a driving signal input by the XY moving mechanism control unit 44 to the stage 14, which is an electric stage 14. When the stage 14 is an electric stage driven by a stepping motor, the velocity of the stage 14 can be calculated on the basis of the number of pulses and a pulse frequency, which is input to the stepping motor. When the stage 14 is an ultrasonic stage, the velocity of the stage 14 can be calculated on the basis of a voltage, and the length of time during which a voltage is applied. Alternatively, the velocity of the stage 14 may be calculated on the basis of both the information about the XY position, which is input from the linear scale 18, and the driving signal. Moreover, the velocity calculation means may calculate the velocity of the stage 14 on the basis of an original image obtained in a way such that the image capturing device 13 captures the image of the sample S.

Still further, the control unit 30 may switch the operating mode to the HDR live mode via a second HDR live mode (a third operating mode) for causing the display unit 80 to display a second HDR image, which has a dynamic range wider than original images and is generated by merging a plural number, smaller than the number of differently exposed images in a case of the first operating mode, of differently exposed images when the control unit 30 switches the operating mode from the normal live mode (the second operating mode) to the HDR live mode (the first operating mode). In this way, the operating mode is switched to the operating mode, in which a larger number of merged images is used, in stages via the operating mode, in which the number of merged images is smaller than that in the HDR live mode (the first operating mode), whereby the length of time taken to store the number of original images (differently exposed images) needed to be merged can be reduced. Accordingly, the time period 209 illustrated in FIGs. 3 and 5 can be shortened, whereby a discontinuity of a display, which is caused by displaying a still image or the like, can be eased.

**Claims**

1. An observation apparatus (100), comprising:

   a stage (14) on which a sample (S) is placed;
   image capturing means (13) for capturing an image of the sample (S) placed on the stage (14);
   velocity calculation means (18, 44, 61) for calculating a velocity of the stage (14);
   display means (80) for displaying an image of the sample (S); and
   a control unit (30) for switching an operating mode, on the basis of the velocity of the stage (14), which is calculated by the velocity calculation means (18, 44, 61), between a first operating mode for causing the display means (80) to display an image, which has a dynamic range wider than original images and is generated by merging the plurality of original images that the image capturing means (13) obtains by capturing images of the sample (S) under a plurality of different image capturing conditions, and a second operating mode for causing the display means (80) to display an original image that the image capturing means (13) obtains by capturing an image of the sample (S) or an image obtained by processing the original image.

2. The observation apparatus (100) according to claim 1, wherein
   the control unit (30) switches the operating mode between the first operating mode and the second operating mode on the basis of the velocity of the stage (14), which is calculated by the velocity calculation means (18, 44, 61), and a threshold value that indicates a specified velocity.

3. The observation apparatus (100) according to claim 2, wherein
   the velocity of the stage (14), which is calculated by the velocity calculation means (18, 44, 61), is an average velocity of the stage (14), which is calculated by performing weighted moving averaging for moving velocities of the stage (14) at a plurality of different times.

4. The observation apparatus (100) according to claim 2 or 3, wherein
   the control unit (30) switches the operating mode from the second operating mode to the first operating mode when the control unit (30) determines that the velocity of the stage (14), which is calculated by the velocity calculation means (18, 44, 61), is equal to or lower than the threshold value in a case where the operating mode is the second operating mode, and switches the operating mode from the first operating mode to the second operating mode when the control unit (30) determines that the velocity of the stage (14), which is calculated by the velocity calculation means (18, 44, 61), is higher than the threshold value in a case where the operating mode is the first operating mode.

**5.** The observation apparatus (100) according to claim 2 or 3, wherein
the control unit (30) switches the operating mode from the second operating mode to the first operating mode when the control unit (30) determines for a predetermined number of times continuously that the velocity of the stage (14), which is calculated by the velocity calculation means (18, 44, 61), is equal to or lower than the threshold value in a case where the operating mode is the second operating mode, and switches the operating mode from the first operating mode to the second operating mode when the control unit (30) determines that the velocity of the stage (14), which is calculated by the velocity calculation means (18, 44, 61), is higher than the threshold value in a case where the operating mode is the first operating mode.

**6.** The observation apparatus (100) according to claim 2 or 3, wherein
the control unit (30) switches the operating mode from the second operating mode to the first operating mode via a third operating mode for causing the display means (80) to display an image, which has a dynamic range wider than original images and is generated by merging a plural number, smaller than the number of original images in a case of the first operating mode, of original images that the image capturing means (13) obtains by capturing images of the sample (S) under a plurality of different image capturing conditions when the control unit (30) determines that the velocity of the stage (14), which is calculated by the velocity calculation means (18, 44, 61), is equal to or lower than the threshold value in a case where the operating mode is the second operating mode, and switches the operating mode from the first operating mode to the second operating mode when the control unit (30) determines that the velocity of the stage (14), which is calculated by the velocity calculation means (18, 44, 61), is higher than the threshold value in a case where the operating mode is the first operating mode.

**7.** The observation apparatus (100) according to any one of claims 2 to 6, wherein
the display means (80) displays the velocity of the stage (14) and the threshold value by making a comparison between the velocity and the threshold value.

**8.** The observation apparatus (100) according to claim 7, wherein
the threshold value is changed by altering a display of the threshold value displayed on the display means (80), and the control unit (30) switches the operating mode between the first operating mode and the second operating mode on the basis of the velocity of the stage (14), which is calculated by the velocity calculation means (18, 44, 61), and the threshold value after being changed.

**9.** The observation apparatus (100) according to any one of claims 1 to 8, wherein
the velocity calculation means (18, 44, 61) comprises an encoder (18) for detecting a position of the stage (14), and calculates the velocity of the stage (14) on the basis of information about the position detected by the encoder (18).

**10.** The observation apparatus (100) according to any one of claims 1 to 8, wherein
the stage (14) is an electric stage, and
the velocity calculation means (18, 44, 61) calculates the velocity of the stage (14) on the basis of a driving signal input to the electric stage.

**11.** The observation apparatus (100) according to any one of claims 1 to 8, wherein
the velocity calculation means (18, 44, 61) calculates the velocity of the stage (14) on the basis of an original image that the image capturing means (13) obtains by capturing an image of the sample (S).

F I G. 1

EP 2 873 998 A1

F I G. 2

F I G. 3

HDR  302  NORMAL

301

F I G. 4 A

302

HDR  NORMAL

301

F I G. 4 B

HDR  NORMAL

301

F I G. 4 C

302

HDR  NORMAL

301

F I G. 4 D

302

HDR  NORMAL

301

F I G. 4 E

F I G. 5

EP 2 873 998 A1

HDR                    312                    NORMAL

301

F I G.   6 A

HDR    312       NORMAL

301

F I G.   6 B

312       NORMAL

301

F I G.   6 C

HDR                              312

301

F I G.   6 D

Europäisches
Patentamt

European
Patent Office

Office européen
des brevets

# EUROPEAN SEARCH REPORT

Application Number

EP 14 19 1407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/069171 A1 (KODAIRA NAOKO [JP] ET AL) 22 March 2012 (2012-03-22) | 1-9,11 | INV. G02B21/36 H04N5/235 G06T5/50 |
| A | * figures 1, 2 * <br> * paragraphs [0007], [0012], [0067] * | 10 | |
| Y | US 2013/070075 A1 (KAKEMIZU TAKAHIKO [JP] ET AL) 21 March 2013 (2013-03-21) <br> * paragraphs [0037], [0038] * | 1-11 | |
| Y | EP 2 328 009 A1 (OLYMPUS CORP [JP]) 1 June 2011 (2011-06-01) <br> * figure 54 * <br> * paragraph [0267] * | 1-8 | |
| Y | US 2011/221881 A1 (SHIROTA TETSUYA [JP] ET AL) 15 September 2011 (2011-09-15) <br> * paragraph [0069] * | 1-9 | |
| Y | EP 2 081 072 A1 (OLYMPUS CORP [JP]) 22 July 2009 (2009-07-22) <br> * paragraph [0104] * | 1,3,5-9 | |
| Y | US 2001/030802 A1 (OOKI HIROSHI [JP] ET AL) 18 October 2001 (2001-10-18) <br> * paragraph [0024] * | 1,3-10 | TECHNICAL FIELDS SEARCHED (IPC) <br><br> G02B H04N G06T |
| A | US 2012/229815 A1 (LANGHOLZ NILS [DE] ET AL) 13 September 2012 (2012-09-13) <br> * paragraphs [0007], [0008] * | 1-11 | |

-/--

The present search report has been drawn up for all claims

| Place of search | Date of completion of the search | Examiner |
|---|---|---|
| Munich | 9 March 2015 | Serbin, Jesper |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 14 19 1407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BELL A A ET AL: "High Dynamic Range Images as a Basis for Detection of Argyrophilic Nucleolar Organizer Regions Under Varying Stain Intensities", IMAGE PROCESSING, 2006 IEEE INTERNATIONAL CONFERENCE ON, IEEE, PI, 11 October 2006 (2006-10-11), pages 2541-2544, XP031049193, DOI: 10.1109/ICIP.2006.312959 ISBN: 978-1-4244-0480-3 * 2. HIGH-DYNAMIC-RANGE IMAGING AND SEGMENTATION * | 1-11 | |
| A | EP 2 103 925 A2 (GENETIX CORP [US]) 23 September 2009 (2009-09-23) * claim 1 * | 1-11 | |

TECHNICAL FIELDS
SEARCHED      (IPC)

The present search report has been drawn up for all claims

| Place of search | Date of completion of the search | Examiner |
|---|---|---|
| Munich | 9 March 2015 | Serbin, Jesper |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................................

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                    EP 14 19 1407

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2015

| Patent document cited in search report | | Publication date | Patent family member(s) | | Publication date |
|---|---|---|---|---|---|
| US 2012069171 | A1 | 22-03-2012 | JP | 2012065257 A | 29-03-2012 |
| | | | US | 2012069171 A1 | 22-03-2012 |
| US 2013070075 | A1 | 21-03-2013 | JP | 2013068738 A | 18-04-2013 |
| | | | US | 2013070075 A1 | 21-03-2013 |
| EP 2328009 | A1 | 01-06-2011 | EP | 2328009 A1 | 01-06-2011 |
| | | | EP | 2339389 A1 | 29-06-2011 |
| | | | US | 2011164314 A1 | 07-07-2011 |
| | | | US | 2011267449 A1 | 03-11-2011 |
| | | | WO | 2010035414 A1 | 01-04-2010 |
| US 2011221881 | A1 | 15-09-2011 | JP | 5555014 B2 | 23-07-2014 |
| | | | JP | 2011186305 A | 22-09-2011 |
| | | | US | 2011221881 A1 | 15-09-2011 |
| EP 2081072 | A1 | 22-07-2009 | EP | 2081072 A1 | 22-07-2009 |
| | | | JP | 5059637 B2 | 24-10-2012 |
| | | | JP | 2009169236 A | 30-07-2009 |
| | | | US | 2009185034 A1 | 23-07-2009 |
| US 2001030802 | A1 | 18-10-2001 | US | 6400502 B1 | 04-06-2002 |
| | | | US | 2001030802 A1 | 18-10-2001 |
| US 2012229815 | A1 | 13-09-2012 | DE | 102011013614 A1 | 13-09-2012 |
| | | | EP | 2497412 A1 | 12-09-2012 |
| | | | JP | 2012190021 A | 04-10-2012 |
| | | | US | 2012229815 A1 | 13-09-2012 |
| EP 2103925 | A2 | 23-09-2009 | EP | 2103925 A2 | 23-09-2009 |
| | | | US | 2009238435 A1 | 24-09-2009 |

EPO FORM P0459

For more details about this annex : see Official Journal of the European Patent Office, No. 12/82

**EP 2 873 998 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012165259 A